# EUROPÄISCHE PATENTSCHRIFT

(11) **EP 1 091 551 B1**
(45) Veröffentlichungstag und Bekanntmachung des Hinweises auf die Patenterteilung: **18.03.2015**
(21) Anmeldenummer: 00121879.1
(22) Anmeldetag: 06.10.2000
(51) Int. Cl.: H04M 7/00, H04M 3/42, H04Q 11/04, H04L 12/46, H04L 12/66, H04L 29/06

(54) **Verfahren zum Betreiben einer Vermittlungseinrichtung unter Nutzung verschiedener Signalisierungsprotokolle**
Method for operating a switching device using different signalling protocols
Procédé pour l'opération d'un commutateur utilisant des protocoles de signalisation différentes

(30) Priorität: 08.10.1999 US 415368
(43) Veröffentlichungstag der Anmeldung: 11.04.2001
(73) Patentinhaber: Unify GmbH & Co. KG, 81379 München (DE)
(72) Erfinder: Coen, Guy, 9300 Aalst (BE); Korpi, Markku, 82319 Starnberg (DE); Müller, Harald, 82205 Gilching (DE)
(74) Vertreter: Fritzsche, Thomas

(56) Entgegenhaltungen:
- EP-A- 0 851 653
- WO-A-96/27967
- KORPI M ET AL: "SUPPLEMENTARY SERVICES IN THE H.323 IP TELEPHONY NETWORK" IEEE COMMUNICATIONS MAGAZINE, IEEE SERVICE CENTER. PISCATAWAY, N.J, US, Bd. 37, Nr. 7, Juli 1999 (1999-07), Seiten 118-125, XP000835313 ISSN: 0163-6804
- BLITZ A ET AL PINNACLE GROUP: "INTEGRATING LAN, H-CHANNELS AND ATM INTO PBX TECHNOLOGY" ISS '97. WORLD TELECOMMUNICATIONS CONGRESS. (INTERNATIONAL SWITCHING SYMPOSIUM). GLOBAL NETWORK EVOLUTION: CONVERGENCE OR COLLISION? TORONTO, SEPT. 21 - 26, 1997, ISS. WORLD TELECOMMUNICATIONS CONGRESS. (INTERNATIONAL SWITCHING SYMPOSIUM), TORONTO, P, Bd. VOL. 2, 21. September 1997 (1997-09-21), Seiten 573-579, XP000704513

## Beschreibung

Die Erfindung betrifft ein Verfahren, bei dem eine Vermittlungseinrichtung Datenverbindungen in einem Telekommunikationsnetz vermittelt. Zwischen einer Steuereinrichtung zum Steuern der Vermittlungseinrichtung und einer ersten Endeinheit wird ein erstes Protokoll zur Signalisierung von Steuerbefehlen verwendet.

Die Vermittlungseinrichtung ist beispielsweise eine Vermittlungsstelle eines Telefonnetzes oder eine Telekommunikationsanlage, an die Systemtelefone angeschlossen werden. Ein Beispiel für eine Telekommunikationsanlage ist die Anlage HICOM der Firma SIEMENS AG. An der HICOM werden beispielsweise Endgeräte vom Typ OPTISET angeschlossen. Zwischen der Steuereinrichtung der HICOM und dem OPTISET-Endgerät wird zur Signalisierung ein vom Hersteller der Telekommunikationsanlage festgelegtes Protokoll verwendet, nämlich das Protokoll Cornet-TS und Cornet-TC. Die Endeinheiten vom Typ OPTISET werden über eine Schnittstelleneinheit an die Vermittlungseinrichtung angeschlossen. In dieser Schnittstelleneinheit wird jedoch keine Protokollumwandlung durchgeführt, weil das für die Vermittlungseinrichtung festgelegte Signalisierungsprotokoll bereits auf die Endgeräte abgestimmt ist. Der Anschluß über eine solche Schnittstelleneinheit wird im folgenden daher als direkter Anschluß an die Vermittlungseinrichtung bezeichnet.

Die Telekommunikationsanlage gehört zu den Vermittlungseinrichtungen, in denen Sprachdaten in einem Sprachkanal übertragen werden. Die Vermittlungseinrichtung schaltet Verbindungen zwischen verschiedenen Sprachkanälen während der Dauer eines Gesprächs. Im einfachsten Fall wird ein Sprachkanal durch eine Leitung gebildet, die nur für eine einzige Verbindung genutzt wird. Über die Leitung werden analoge oder digitale Sprachdaten ohne Unterbrechung durch Informationen zur Verbindungssteuerung ausgetauscht. Meist werden jedoch auf einer Leitung oder auf einer Funkübertragungsstrecke im Zeit-Multiplex-Verfahren die zu verschiedenen Verbindungen gehörenden Sprachdaten übertragen. Innerhalb zeitlich aufeinanderfolgender Zeitrahmen ist für jede Verbindung zum Übertragen der Sprachdaten ein Zeitabschnitt festgelegt.

Auch in Datenübertragungsnetzen,z.B. dem Internet oder einem Intranet in denen Daten in Datenpaketen übertragen werden, gibt es Vermittlungseinrichtungen, welche die Datenpakete abhängig von einem Kennzeichen im Kopf des Catenpaketes in verschiedene Richtungen weiterleiten. Ein Datenpaket enthält üblicherweise mehrere Datenworte mit einer vorgegebenen Anzahl Bitstellen, beispielsweise sogenannte Oktetts mit acht Bitstellen. Generell lassen sich in einem Datenpaket Oktetts unterscheiden, die zum Datenkopf gehören. Im Datenkopf sind neben Daten zur Bezeichnung des Ziels des Datenpakets beispielsweise auch Daten enthalten, welche die Art des Datenpaketes festlegen. Zusätzlich zum Datenkopf gibt es in der Regel Datenworte, welche die Nutzinformation enthalten, beispielsweise die Sprachdaten. Es werden auch Datenworte übertragen, die einen Endabschnitt des Datenpakets bilden und beispielsweise eine Prüfsumme zur Fehlererkennung und Fehlerkorrektur enthalten. Beispielsweise gibt es in einem ATM-Netz (Asynchronius Transfer Mode) sogenannte Cross-Connectoren, Konzentratoren und ATM-Vermittlungastellen zur Vermittlung von Datenpaketen. Für das Datenübertragungsnetz ist ein eigenes Signalisierungsprotokoll festgelegt.

Sollen Verbindungen zwischen Endeinheiten aufgebaut werden, die sich in verschiedenen Netzen befinden, d.h., bei deren Betrieb auch verschiedene Signalisierungsprotokolle verwendet werden, so wird üblicherweise eineÜbergangseinrichtung zwischen den Netzen verwendet. Solche Übergangseinrichtungen werden englisch auch als Gateways bezeichnet. Die Übergangseinrichtung stellt Funktionen für alle unteren Schichten des sogenannten OSI-Referenzmodells zur Verfügung (Open Systems Interconnection), d.h. für die Bitübertragungsschicht, die Sicherungsschicht, die Vermittlungsschicht und die Transportschicht. In der Übertragungseinheit werden auch die Signalisierungsprotokolle umgewandelt.

In EP 0 851 653 A2 ist ein Kabelmodem beschrieben, das Zwei-Wege paketbasierten Verkehr unterstützt und zu einfacher Telefonie-Typ Signalisierung fähig ist. Die Telefonie-Typ Signalisierung wird unter Verwendung des TCP/IP-Protokolls übertragen. Ein Pakettelefon-Gateway (packet phone gateway) übersetzt eine empfangene Verzeichnisnummer (directory number) einer ISDN-Signalisierungsnachricht in eine entsprechende IP-Adresse für das Kabelmodem, wobei auf Steuer- und Nutzprotokollebene ein Verknüpfen (interworking) erfolgt. Sobald eine Telefonverbindung eingerichtet ist, tastet das Kabelmodem ab und digitalisiert Sprache zur Übertragung an den angerufenen Teilnehmer.

In KORPI M ET AL: "SUPPLEMENTARY SERVICES IN THE H.323 IP TELEPHONY NETWORK" IEEE COMMUNICATIONS MAGAZINE, IEEE SERVICE CENTER. PISCATAWAY, N.J, US, Bd. 37, Nr. 7, Juli 1999 (1999-07), Seiten 118-125, ISSN: 0163-6804, sind ergänzende Dienste in einem H.323 IP Telefonienetzwerk beschrieben, wobei in einer Verknüpfungsschicht (interworking layer) eines Gateways die ergänzenden Dienstsignalisierungsverfahren, Nachrichten und Protokollelemente zwischen zwei Netzwerken abgebildet werden. In Fällen von Rufen von einem durchschaltevermittelnden Netzwerk zu einem anderen durchschaltevermittelnden Netzwerk über H.323 kann das Gateway einen netzwerkspezifischen Signalisierungstransport über den Einbindungsmechanismus zur Verfügung stellen, der in H.450.1 unter Verwendung eines Übersetzers (interpreter) bereitgestellt wird. Alternativ kann jedes Gateway sein durchschaltevermittelndes Signalisierungsschema direkt auf dem IP mittels Gateway-Verknüpfung und Codec-Umcodierung transportieren.

Es ist Aufgabe der Erfindung, ein einfaches Verfahren zum Betreiben einer durchschaltevermittelnden Vermittlungseinrichtung mit Endgeräten anzugeben, die gemäß verschiedenen Signalisierungsprotokollen arbeiten.

Die ein Verfahren betreffende Aufgabe wird durch die im Patentanspruch 1 angegebenen Verfahrensschritte gelöst. Weiterbildungen sind in den Unteransprüchen angegeben.

Die Erfindung geht von der Überlegung aus, daß beim Verwenden der bekannten Übertragungseinheiten die Signalisierungsprotokolle zu jedem an die Übertragungseinheit angrenzenden Netz hin vollständig terminiert werden müssen, d.h., daß auf Anforderungen entsprechende Bestätigungen und auf Meldungen entsprechende Antworten zu erzeugen sind. Eine vollständige Anpassung der Signalisierungsbefehle läßt sich nur mit sehr großem Aufwand realisieren. Meist sind breit. Verwenden des Netzübergangs bestimmte Leistungsmerknale nicht nutzbar, die bei einer Signalisierung ausschließlich in einem der beiden Netze nutzbar sind.

Weiterhin beruht die Erfindung auf der Erkenntnis, daß diese Probleme nicht auftreten, wenn in einem Endgerät des einen Netzes bereits Befehle gemäß Signalisierungsprotokoll des anderen Netzes erzeugt werden und diese Befehle dann zur vermittlungseinrichtung "getunnelt" werden, d.h. die Befehle gemäß Signalisierungsprotokoll des anderen Netzes werden in Befehle des Signalisierungsprotokolls desjenigen Netzes eingebettet, in dem das Endgerät betrieben wird.

Deshalb wird beim erfindungsgemäßen Verfahren die Steuereinheit der Vermittlungseinrichtung über eine Schnittstelleneinheit mit einer zweiten Endeinheit verbunden. Zwischen der Schnittstelleneinheit und der zweiten Endeinheit wird zur Signalisierung von Steuerbefehlen ein zweites Protokoll verwendet, das sich vom ersten Protokoll unterscheidet. Eine von der Schnittstelleneinheit umfasste Umwandlungseinheit bettet von der Steuereinheit (62) gemäß erstem Protokoll empfangene Steuerbefehle in Steuerbefehle gemäß zweitem Protokoll ein und sendet diese an die zweite Endeinheit und/oder entnimmt aus von der zweiten Endeinheit gemäß zweitem Protokoll empfangenen Steuerbefehlen Steuerbefehle gemäß erstem Protokoll, die zuvor in der zweiten Endeinheit in Signalisierungsbefehle gemäß zweitem Protokoll eingebettet worden sind, und sendet diese an die Steuereinheit. Eine erste von der Schnittstelleneinheit umfasste Sprachübertragungseinheit teilt in einem Sprachkanal übertragene Sprachdaten auf Datenpakete auf. Eine zweite von der Schnittstelleneinheit umfasste Sprachübertragungseinheit entnimmt Datenpaketen Sprachdaten und sendet sie in einem Sprachkanal. Eine der ersten und zweiten Sprachübertragungseinheit zugeordnete und von der Schnittstelleneinheit umfasste Verbindungseinheit, die zum Aufbau bzw. zum Abbau einer Sprachübertragungsverbindung dient, wird mit der Umwandlungseinheit verbunden. In der Schnittstelleneinheit wird neben dem ersten und zweiten Protokoll eine Nutzdatenverbindung derart bearbeitet, dass die Schnittstelleneinheit zur Vermittlungseinrichtung hin wie die erste Endeinheit und zur zweiten Endeinheit hin wie eine weitere zweite Endeinheit arbeitet.

Durch das Tunneln wird erreicht, daß bei bestimmten Änderungen des ersten Signalisierungsprotokolls in der Schnittstelleneinheit keine Veränderungen vorgenommen werden müssen. Hat das erste Signalisierungsprotokoll beispielsweise Befehlsworte mit einer Bitlänge von acht Bit, so kann ohne Änderung der Schnittstelleneinheit ein neues Befehlswort festgelegt werden, das von der Schnittstelleneinheit sowie die bisher verwendeten Befehlsworte in Steuerbefehle gemäß zweitem Signalisierungsprotokoll eingebettet oder aus Steuerbefehlen gemäß zweitem Signalisierungsprotokoll entnommen wird. Änderungen sind nur in der Vermittlungseinrichtung und im Endgerät durchzuführen.

Durch das Tunneln wird außerdem erreicht, daß die Vermittlungseinrichtung die Endeinheit bzw. die Endeinheit die Vermittlungsstelle nach Art einer verdeckten Fernsteuerung netzübergreifend steuert. Dabei lassen sich die Leistungsmerkmale der Vermittlungseinrichtung vollständig bei der Signalisierung zwischen Endeinheit und Vermittlungseinrichtung nutzen.

Beim erfindungsgemäßen Verfahren wird die Schnittstelleneinheit von der Vermittlungseinrichtung aus so angesteuert, wie die erste Endeinheit. Auch die Schnittstelleneinheit signalisiert zur Vermittlungseinrichtung nur so, wie auch das erste Endgerät. Veränderungen in der Vermittlungseinrichtung sind beim Anschluß der Schnittstelleneinheit deshalb nicht erforderlich. Zur zweiten Endeinheit hin erscheint die Schnittstelleneinheit dagegen wie eine Endeinheit des Datenübertragungsnetzes, in dem gemäß zweitem Signalisierungsprotokoll signalisiert wird.

Bei einer Weiterbildung ist das erste Protokoll ein Stimulus-protokoll, mit dessen Hilfe Zustände von Bedienelementen einer Endeinheit an die Steuereinheit gemeldet werden und/oder mit dessen Hilfe Zustände von Signalelementen einer Endeinheit von der Steuereinheit gesetzt werden können. Die Endeinrichtung benötigt so keine Informationen über Aufruf, Steuerung und Art der Leistungsmerkmale. Die Leistungsmerkmale sind in der Vermittlungseinrichtung festgelegt. Damit können die Endeinheiten einfach aufgebaut werden. Durch das Tunneln wird erreicht, daß die netzspezifisch definierten Leistungsmerkmale auch von einem anderen Netz aus vollständig genutzt werden können.

Bei einer anderen Weiterbildung ist das zweite Protokoll ein funktionales Protokoll, das abhängig von einer in einer Endeinheit ausgewählten oder von einer Endeinheit auszuführenden Funktion einen für diese Funktion festgelegten Befehl erfordert. In diesem Fall wird für das Tunneln ein besonderer Befehl des funktionalen Protokolls festgelegt. Mit diesem Befehl werden dann Befehle gemäß Stimulus-Protokoll oder gemäß einem anderen funktionalen Protokoll in der Schnittstelleneinheit getunnelt.

Bei einer nächsten Weiterbildung des erfindungsgemäßen Verfahrens werden in der Schnittstelleneinheit die übertragenen Befehle nach Befehlen durchsucht, die den Aufbau oder den Abbau einer Nutzdatenverbindung zwischen vermittlungseinrichtung und zweiter Endeinheit erfordern. Beim Auftreten eines gesuchten Befehls wird von der Schnittetelleneinheit der Aufbau oder der Abbau der Nutzdatenverbindung veranlaßt.

Dieser Weiterbildung liegt die Überlegung zugrunde, daß die Schnittstelleneinheit zur Vermittlungseinrichtung hin wie ein erstes Endgerät, d.h. ein direkt an die Vermittlungzeinrichtung anschließbares Endgerät, arbeiten sollte. Zur zweiten Endeinheit hin sollte die Schnittstelleneinheit genau so wie eine Endeinheit des zweiten Netzes arbeiten. Dies lässt sich erreichen, wenn neben dem Signalisierungsprotokoll auch die Nutzdatenverbindung in der Schnittstelleneinheit bearbeitet wird. In der Vermittlungseinrichtung wird der Aufbau bzw. Abbau der Nutzdatenverbindung üblicherweise durch eine Hardware durchgeführt. Diese Hardware kann jedoch nicht zum Aufbau einer Nutzdatenverbindung zu einem anderen Netz genutzt werden. Deshalb übernimmt die Schnittstelleneinheit diese Aufgabe.

In der Vermittlungseinrichtung werden für die Signalisierung und die Nutzdatenverbindung zum zweiten Endgerät dieselben Verfahrensschritte wie für eine Verbindung zu der ersten Endeinheit ausgeführt. Zusätzliche Verfahrensschritte sind nicht auszuführen. Damit wird erreicht, daß in der Vermittlungseinrichtung bei einer Verbindung zu einer zweiten Endeinheit im Vergleich zu einer Verbindung zur ersten Endeinheit keine zusätzlichen Ressourcen benötigt werden, d.h. keine zusätzlichen Signalisierungsverbindungen und keine zusätzlichen Nutzdatenverbindungen. Die Vermittlungseinrichtung lässt sich somit für eine Vielzahl von Verbindungen zu Endeinheiten benutzen, die gemäß zweitem Signalisierungsprotokoll arbeiten.

Werden bei einer Weiterbildung in der Schnitstelleneinheit von der Vermittlungseinrichtung in einem Datenkanal übertragene Daten auf Datenpakete verteilt und gemäß einem für die zweite Endeinheit festgelegten Übertragungsprotokoll an diese Endeinheit übertragen, so ist die Schnittstelleneinheit eine Schnittstelle zwischen einem Datenübertragungsnetz, in welchem die Daten in Sprachkanälen übertragen werden, und einem Datenübertragungsnetz, in dem die Daten in Datenpaketen übertragen werden. In der anderen Richtung werden in der Schnittstelle vom zweiten Endgerät kommende Datenpakete entpackt und die entpackten Daten werden in einem Datenkanal an die vermittlungseinrichtung weitergeleitet. Die Übertragung von Daten in einem Datenkanal wird insbesondere zur Übertragung von Sprachdaten verwendet, weil Sprachdaten einen Sprachkanal gut auslasten. Durch das Verwenden der Schnittstelleneinheit können die Sprachdaten jedoch auch in Datenübertragungsnetzen übertragen werden, in denen hauptsächlich andere Daten als Sprachdaten übermittelt werden, beispielsweise Dokumentdateien, Programmdateien oder Tabellenkalkulationsdateien.

Bei einer Weiterbildung wird das erfindungsgemäße Verfahren für eine zweite Endeinheit eingesetzt, die gemäß ITU-Standard (International Telecommunication Union) H.323 "Packed-Based-Multimedia Communication Systems" arbeitet. In diesem Fall lassen sich in der zweiten Endeinheit Leistungsmerkmale der vermittlungseinrichtung ohne größeren Aufwand nutzen. Es braucht nicht abgewartet zu werden, bis für diese Leistungsmerkmale auf den Standard H.323 aufbauende Standards entwickelt worden sind, vgl. beispielsweise Standard H.450.1 "Generic Functional Protocol for the Support of Supplementary Services in H.323" und die Standards H.450.2 ff.

Die Erfindung betrifft außerdem eine Schnittstelleneinheit, die zur Ausführung des erfindungsgemäßen Verfahrens oder dessen Weiterbildungen geeignet ist. Die erfindungsgemäß Schnittstelleneinheit wird insbesondere in einer Vermittlungseinrichtung eingesetzt. Weiterhin betrifft die Erfindung eine Verwendung eines Programms zur Ausführung des erfindungsgemäßen Verfahrens oder dessen Weiterbildungen.. Die oben für das erfindungsgemäße Verfahren und dessen Weiterbildungen genannten technischen Wirkungen gelten auch für die Schnittstelleneinheit, die Vermittlungseinrichtung und das Programm.

Im folgenden werden Ausführungsbeispiele der Erfindung an Hand der beiliegenden Zeichnungen erläutert. Darin zeigen:
- Figur 1: den Anschluß eines paketbasiert arbeitenden Endgeräts an eine Telekommunikationsanlage,
- Figur 2: den Aufbau einer Anschlußbaugruppe für den Anschluß des paketbasiert arbeitenden Endgeräts an die Telekommunikationsanlage,
- Figur 3: den Aufbau des paketbasiert arbeitenden Endgeräts, und
- Figur 4: sogenannte Protokollstapel für die Telekommunikationsanlage und für das paketbasiert arbeitende Endgerät.

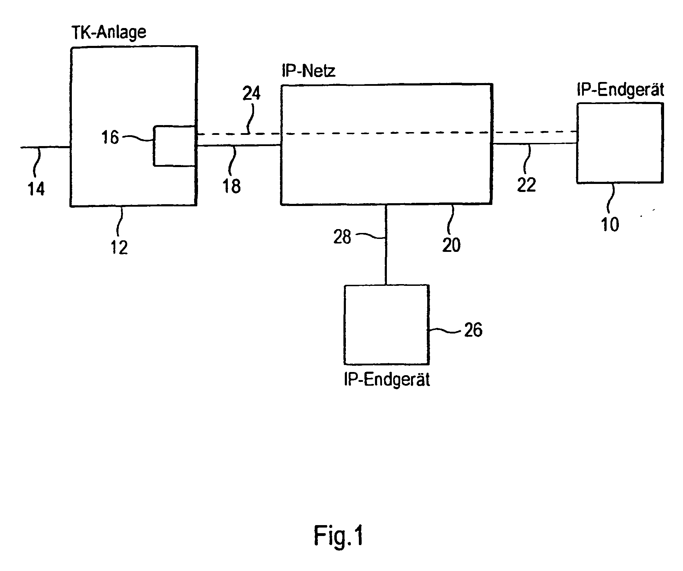

Figur 1 zeigt ein paketbasiert arbeitendes Endgerät 10, das an eine Telekommunikationsanlage 12 angeschlossen ist. Das Endgerät 10 arbeitet gemäß ITU-T-Standard H.323. Als Übertragungsprotokoll verwendet das Endgerät 10 das Internet-Protokoll TCP/IP (Transmission Control Protocol/Internet Protocol). Eine in Figur 1 nicht dargestellte Einheit des Endgeräts 10 dient zur Spracheingabe und zur Sprachausgabe. Aus den eingegebenen Sprachsignalen werden im Endgerät 10 Sprachdaten erzeugt, die auf Datenpakete aufgeteilt und zur Telekommunikationsanlage 12 gesendet werden. Andererseits werden vom Endgerät 10 in Datenpaketen empfangene Daten wieder in Sprachsignale umgewandelt und ausgegeben.

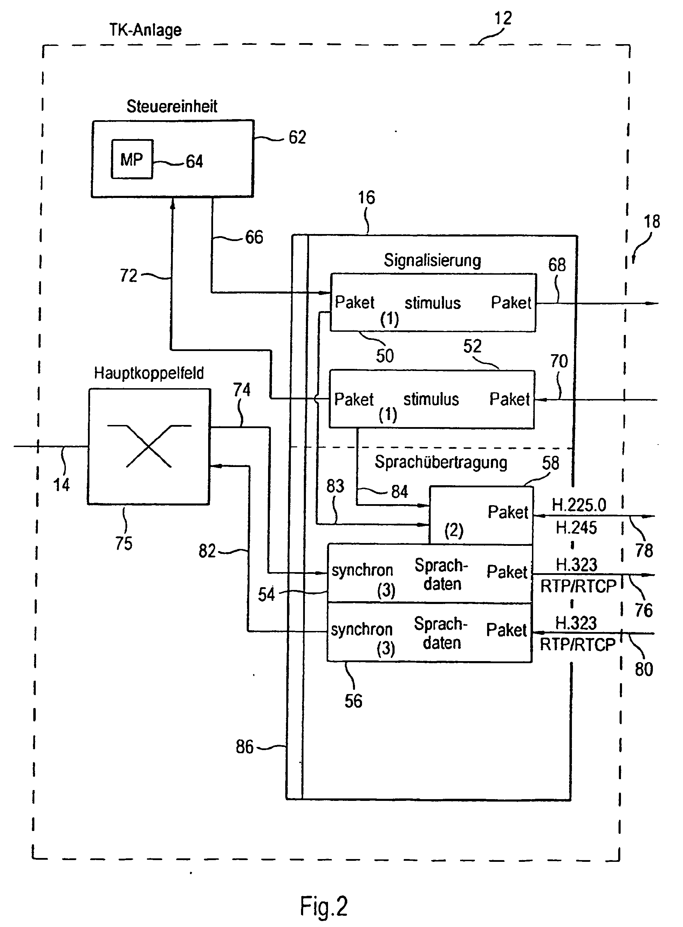

Die Telekommunikationsanlage 12 ist eine durchschaltevermittelnde Telekommunikationsanlage, in der Sprachkanäle für die Dauer eines Gesprächs verbunden werden. Die Telekommunikationsanlage 12 ist über Amtsleitungen 14 mit einer digitalen Vermittlungsstelle im öffentlichen Fernsprechnetz verbunden, z.B. im Fernsprechnetz der TELECOM AG. Eine Anschlußbaugruppe 16 in der Telekommunikationsanlage 12 ermöglicht den Betrieb des Endgeräts 10 an der Telekommunikationsanlage 12. Der Aufbau der Anschlußbaugruppe 16 wird unten an Hand der Figur 2 erläutert. An der Anschlußbaugruppe 16 ist eine Leitung 18 angeschlossen, die zu einem Intranet 20 gehört. Das Intranet 20 dient einer Privatfirma sowohl für die interne Datenübertragung als auch für die interne Sprachübertragung. Im Intranet 20 werden die Daten gemäß Protokoll TCP/IP übertragen.

Zum Intranet 20 gehört auch eine Leitung 22, an deren einem Ende das Endgerät 10 angeschlossen ist. Somit kann vom Endgerät 10 über die Leitung 22, das Intranet 20 und die Leitung 18 eine Verbindung 24 zur Telekommunikationsanlage 12 aufgebaut werden.

In Figur 1 ist außerdem ein Endgerät 26 dargestellt, das mit Hilfe einer Leitung 28 an das Intranet 20 angeschlossen ist. Das Endgerät 26 arbeitet ebenfalls gemäß ITU-T-Standard H.323.

Figur 2 zeigt den Aufbau der Anschlußbaugruppe 16, die in der Telekommunikationsanlage 12 untergebracht ist. Die Anschlußbaugruppe 16 enthält zwei Signalisierungseinheiten 50 und 52, zwei Sprachübertragungseinheiten 54, 56 sowie eine Verbindungseinheit 58, deren Funktion im folgenden erläutert werden. Eine Steuereinheit 62 der Telekommunikationsanlage 12 enthält einen Prozessor 64, der in einem nicht dargestellten Speicher enthaltene Befehle abarbeitet und dabei zentrale Aufgaben der Telekommunikationsanlage 12 ausführt. Die Steuereinheit 62 ist mit der Signalisierungseinheit 50 über eine Signalisierungsstrecke 66 verbunden, über welche von der Steuereinheit 62 an die Signalisierungseinheit 50 Signalisierungsdaten gemäß einem ersten paketbasierten Signalisierungsprotokoll gesendet werden. Das erste Signalisierungsprotokoll wurde vom Hersteller der Telekommunikationsanlage 12 festgelegt und dient zur Signalisierung zwischen der Telekommunikationsanlage 12 und direkt an die Telekommunikationsanlage 12, d.h. ohne Protokollumwandlung, angeschlossenen Endgeräten. Wird als Telekommunikationsanlage 12 beispielsweise eine Anlage vom Typ HICOM der Firma SIEMENS AG verwendet, so ist das erste Signalisierungsprotokoll das Protokoll Cornet TS.

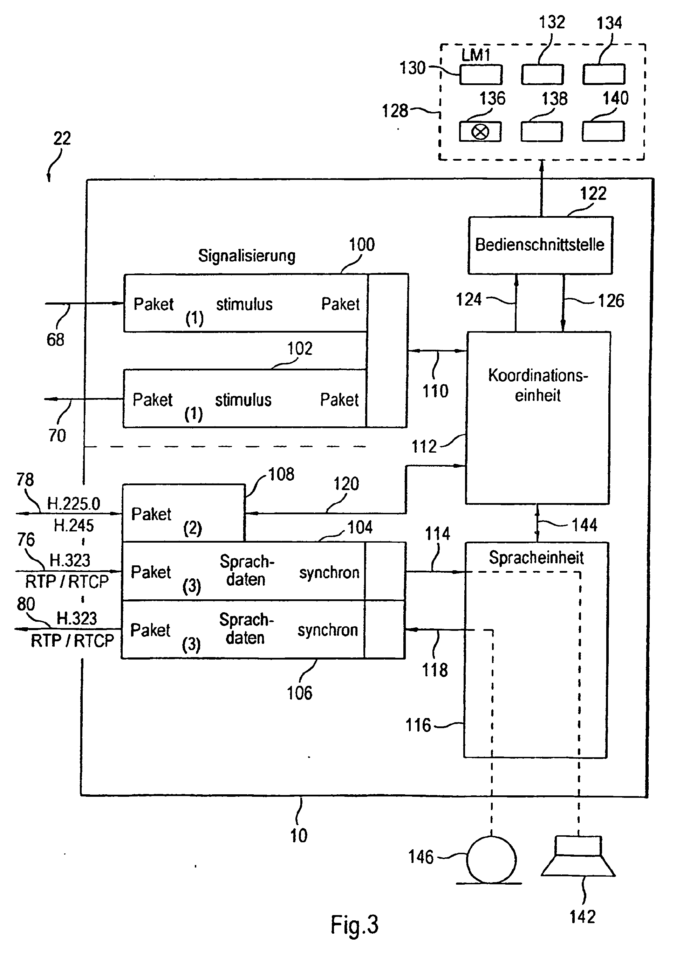

Ausgangsseitig ist die Signalisierungseinheit 50 mit einer logischen Signalisierungsstrecke 68 verbunden. Logisch bedeutet, daß die Daten über die Leitung 18 übertragen werden, jedoch an Hand eines Kennzeichens im jeweiligen Datenpaket eine Zuordnung zur Signalisierungsstrecke 68 erfolgt. Die Signalisierungsstrecke 68 endet am Endgerät 10, vgl. Figur 3. Die Signalisierungseinheit 50 bettet von der Steuereinheit 62 gemäß erstem Signalisierungsprotokoll empfangene Steuerbefehle in Steuerbefehle gemäß einem zweiten Signalisierungsprotokoll ein. Das zweite Signalisierungsprotokoll entspricht dem Standard H.323 und ist ebenfalls paketbasiert. Die so erzeugten Steuerbefehle gemäß Standard H.323 werden dann von der Signalisierungseinheit 50 über die Signalisierungsstrecke 68 an das Endgerät 10 gesendet.

Die Signalisierungseinheit 52 empfängt vom Endgerät 10 über eine logische Signalisierungsstrecke 70 Signalisierungsdaten gemäß Standard H.323. Aus diesen Signalisierungsdaten werden in der Signalisierungseinheit 52 Steuerbefehle gemäß erstem Protokoll entnommen und zur Steuereinheit 62 übertragen. Die Signalisierungsstrecke 70 nutzt als Übertragungsmedium ebenfalls die Leitung 18.

Die Sprachübertragungseinheit 54 teilt in einem Sprachkanal übertragene Sprachdaten auf Datenpakete auf. Die Sprachübertragungseinheit 54 ist eingangsseitig über eine Übertragungsstrecke 74 mit einem Ausgang des Hauptkoppelfeldes 75 der Telekommunikationsanlage 12 verbunden. Eingangsseitig ist das Hauptkoppelfeld 75 mit den Amtsleitungen 14 verbunden, so daß abhängig von den im Hauptkoppelfeld 75 geschalteten Verbindungen Sprachdaten von einer Amtsleitung 14 über die Übertragungsstrecke 74 zur Sprachübertragungseinheit 54 übertragen werden. Die Übertragung der Sprachdaten erfolgt auf den Amtsleitungen 14, im Hauptkoppelfeld 75 und auf der Übertragungsstrecke 74 gemäß PCM-Verfahren (Pulse Code Modulation) und somit in Sprachkanälen gemäß einem Multiplex-Verfahren, das auch als TDM bezeichnet wird (Time Division Multiplex).

In der Sprachübertragungseinheit 54 werden aus synchron in einem Sprachkanal übertragenen Sprachdaten Datenpakete erzeugt. Die Datenpakete werden über eine mit dem Ausgang der Sprachübertragungseinheit 54 verbundene logische Übertragungsstrecke 76 gemäß dem im Standard H.323 festgelegten Übertragungsprotokoll zum Endgerät 10 übertragen. Als Übertragungsprotokoll wird das Übertragungsprotokoll RTP/RTCP (Real Time Protocol/Real Time Control Protocol) verwendet. Der Sprachübertragungseinheit 54 ist die Verbindungseinheit 58 zugeordnet, mit deren Hilfe die Sprachübertragungsverbindung auf der logischen Übertragungsstrecke 76 aufgebaut und abgebaut wird. Die Verbindungseinheit 58 ist ausgangsseitig mit einer logischen Signalisierungsstrecke 78 verbunden, die zum Endgerät 10 führt. Bei Auf- bzw. Abbau der Sprachverbindung auf der Übertragungsstrecke 76 signalisiert die Verbindungseinheit 58 auf der Signalisierungsstrecke 78 gemäß der in den ITU-T-Standards H.225.0 und H.245 festgelegten Signalisierungsprotokollen.

Die Sprachübertragungseinheit 56 ist eingangsseitig mit einer logischen Übertragungsstrecke 80 verbunden, die vom Endgerät 10 kommt. Ausgangsseitig ist die Sprachübertragungseinheit 56 mit einer Übertragungsstrecke 82 verbunden, die zum Hauptkoppelfeld 75 führt. Auf der Übertragungsstrecke 80 werden Sprachdaten in Datenpaketen gemäß Standard H.323 und gemäß der Protokolle RTP/RTCP gesendet. Die Sprachübertragungseinheit 56 entnimmt den empfangenen Datenpaketen die Sprachdaten und sendet sie in einem Sprachkanal, d.h. in synchronen Sprachkanälen, an das Hauptkoppelfeld 75. Auf der Übertragungsstrecke 82, im Hauptkoppelfeld 75 und auf den Amtsleitungen 14 werden die Sprachdaten gemäß PCM-Verfahren übertragen.

Der Sprachübertragungseinheit 56 ist ebenfalls die Verbindungseinheit 58 zugeordnet, die zum Aufbau bzw. zum Abbau der Sprachübertragungsverbindung auf der Übertragungsstrecke 80 dient. Die Verbindungseinheit 58 ist über eine Steuerleitung 83 mit der Signalisierungseinheit 50 und über eine Steuerleitung 84 mit der Signalisierungseinheit 52 verbunden. In den Signalisierungseinheiten 50 und 52 werden die übertragenen Befehle gemäß erstem Signalisierungsprotokoll daraufhin überprüft, ob ein Aufbau bzw. Abbau einer Sprachübertragungsverbindung erforderlich ist. Treten Signalisierungsbefehle in der Signalisierungseinheit 50 bzw. 52 auf, so wird dies der Verbindungseinheit 58 über die Steuerleitung 83 bzw. 84 signalisiert. Die Verbindungseinheit 58 veranlaßt dann den Aufbau bzw. Abbau von Sprachübertragungsverbindungen auf den logischen Übertragungsstrecken 76 und 80. Somit geht der Aufbau bzw. Abbau einer Sprachübertragungsverbindung von der Telekommunikationsanlage 12 und nicht vom Endgerät 10 aus.

Eine Schnittstelle 86 enthält die Signalisierungsstrecken 66 und 72 sowie die Übertragungsstrecken 74 und 82. Die Schnittstelle 86 entspricht der an einem Endgerät vom Typ OPTISET vorhandenen Schnittstelle zur Telekommunikationsanlage 12.

Figur 3 zeigt den Aufbau des paketbasiert arbeitenden Endgeräts 10. Das Endgerät 10 enthält zwei Signalisierungseinheiten 100 und 102, zwei Sprachübertragungseinheiten 104 und 106 sowie eine Verbindungseinheit 108. Die Signalisierungseinheit 100 ist eingangsseitig mit der logischen Signalisierungsstrecke 68 verbunden. Ausgangsseitig ist die Signalisierungseinheit 100 über eine bidirektionale Übertragungsstrecke 110 mit einer Koordinationseinheit 112 verbunden. In der Signalisierungseinheit 100 werden aus von der Telekommunikationsanlage 12 über die Signalisierungsstrecke 68 empfangenen Signalisierungsbefehlen gemäß Übertragungsprotokoll H.323 Signalisierungsbefehle gemäß dem ersten Signalisierungsprotokoll Cornet-TS entnommen und über die Übertragungsstrecke 110 an die Koordinationseinheit 112 weitergeleitet.

Die Signalisierungseinheit 102 ist eingangsseitig über die Übertragungsstrecke 110 mit der Koordinationseinheit 112 verbunden. Ausgangsseitig ist die Signalisierungseinheit 102 mit der Übertragungsstrecke 70 verbunden, auf der Signalisierungsdaten gemäß Standard H.323 übertragen werden. In der Signalisierungseinheit 102 werden von der Koordinationseinheit 112 über die Übertragungsstrecke 110 übertragene Signalisierungsdaten gemäß erstem Signalisierungsprotokoll in Signalisierungsdaten gemäß Signalisierungsprotokoll H.323 eingebettet. Für das Einbetten wird ein spezieller Befehl festgelegt, um den der Standard H.323 erweitert worden ist.

Die Sprachübertragungseinheit 104 ist eingangsseitig mit der logischen Übertragungsstrecke 76 verbunden. Ausgangsseitig ist die Sprachübertragungseinheit 104 über eine Leitung 114 mit einer Spracheinheit 116 verbunden. In der Sprachübertragungseinheit 104 werden von der Telekommunikationsanlage 12 über die logische Übertragungsstrecke 76 gesendete Datenpakete empfangen, die Sprachdaten enthalten. Die in den Datenpaketen enthaltenen Sprachdaten werden in der Sprachübertragungseinheit 104 aus den Datenpaketen entnommen und in einem Sprachkanal synchron über die Leitung 114 zur Spracheinheit 116 übertragen.

Die Sprachübertragungseinheit 106 ist eingangsseitig über eine Leitung 118 mit der Spracheinheit 116 verbunden. Der Ausgang der Sprachübertragungseinheit 106 ist mit der Übertragungsstrecke 80 verbunden. In der Sprachübertragungseinheit 106 werden in einem Sprachkanal über die Leitung 118 übertragene Sprachdaten auf Datenpakete aufgeteilt, die dann gemäß Standard H.323 über die Übertragungsstrecke 80 an die Telekommunikationsanlage 12 gesendet werden.

Die Verbindungseinheit 108 ist zur Seite der Telekommunikationsanlage 12 hin mit der bidirektionalen Signalisierungsstrecke 78 verbunden. Eine bidirektionale Signalisierungsstrecke 120 verbindet die Verbindungseinheit 108 und die Koordinationseinheit 112. Die Verbindungseinheit 108 empfängt Signalisierungsdaten gemäß Standard H.225.0 und H.245 von der Telekommunikationsanlage 12 und leitet die darin enthaltenen Signalisierungsbefehle an die Koordinationseinheit 112 weiter. Abhängig von den auf der Signalisierungsstrecke 78 empfangenen Steuerbefehlen wird die Verbindungseinheit 108 für den Aufbau einer Sprachverbindung zwischen Telekommunikationsanlage 12 und Endgerät 10 verwendet. Die Sprachverbindung wird über die Sprachübertragungseinheiten 104 und 106 aufgebaut.

Die logischen Signalisierungsstrecken 68, 70, die logischen Übertragungsstrecken 76 und 80 sowie die logische Signalisierungsstrecke 78 benutzen als Übertragungsmedium die Leitung 22. Die Leitung 22 ist, wie bereits erwähnt, über das Intranet 20 mit der Leitung 18 verbunden.

Die Koordinationseinheit 112 steuert das Endgerät 10 und arbeitet eng mit einer Bedienschnittstelle 122 zusammen, wobei von der Koordinationseinheit 112 zur Bedienschnittstelle 122 Steuersignale über eine Leitung 124 übertragen werden. Von der Bedienschnittstelle 122 zur Koordinationseinheit 112 werden über eine Leitung 126 Steuersignale übertragen. Die Bedienschnittstelle 122 enthält Programme, bei deren Abarbeiten zusätzliche Leistungsfunktionen im Endgerät 10 genutzt werden können. Auf einem am Endgerät 10 an geschlossenen Bildschirm 128 werden mit Hilfe der Bedienschnittstelle 122 Bedienelemente dargestellt, mit denen sich die zusätzlichen Leistungsfunktionen nutzen lassen. In Figur 3 sind drei Bedientasten 130, 132 und 134 dargestellt, unter denen sich jeweils ein Anzeigefeld 136, 138 bzw. 140 befindet.

Der Bedientaste 130 ist ein Leistungsmerkmal LM1 "Anruf halten" zugeordnet. Wird dieses Leistungsmerkmal LM1 von einer Bedienperson mit Hilfe einer Computer-Maus aufgerufen, so wird das unter der Bedientaste 130 liegende Anzeigefeld 136 durch die im folgenden erläuterten Vorgänge in einem leuchtenden Zustand dargestellt.

Das Betätigen der Bedientaste 130 wird von der Bedienschnittstelle 122 an die Koordinationseinheit 112 über die Leitung 126 signalisiert. Die Koordinationseinheit 112 erzeugt auf der Leitung 110 einen Steuerbefehl gemäß Protokoll Cornet-TS. Dieser Befehl wird über die Signalisierungseinheit 102, die Signalisierungsstrecke 70 und die Signalisierungseinheit 52 zur Steuereinheit 62 der Telekommunikationsanlage 12 "getunnelt".

Der auf der Übertragungsstrecke 110 erzeugte Steuerbefehl erscheint unverändert auf der Signalisierungsstrecke 72. Der Steuerbefehl enthält dabei die Information "Bedientaste 130 gedrückt". Die Steuereinheit 62 wird durch diesen Steuerbefehl veranlaßt, eine bisher bestehende Verbindung zwischen einem mit der Telekommunikationsanlage 12 verbundenen Teilnehmer und dem Benutzer des Endgeräts 10 zu trennen. Für den Benutzer des Endgeräts 10 wird ein Wählton in die Übertragungsstrecke 74 eingespeist, der über die Übertragungsstrecke 76 übertragen wird und der auch auf der Leitung 114 auftritt. Die Spracheinheit 116 gibt den Wählton an einem Lautsprecher 142 des Endgeräts 10 aus, so daß er für den Benutzer hörbar ist.

Für den anderen Teilnehmer wird von der Steuereinheit 62 eine Melodie erzeugt, die einen Wartezustand anzeigt. Die Steuereinheit 62 erzeugt außerdem gemäß Stimulus-Protokoll Cornet-TS einen Steuerbefehl, der das Anzeigefeld 136 in den leuchtenden Zustand versetzen soll. Dieser Steuerbefehl wird in der Signalisierungseinheit 50 in einen Befehl gemäß Standard H.323 eingebettet und über die Signalisierungsstrecke 68 zum Endgerät 10 übertragen. In der Signalisierungseinheit 100 wird der Steuerbefehl gemäß Stimulus-Protokoll dem Befehl gemäß Standard H.323 entnommen und an die Koordinationseinheit 112 weitergeleitet. Die Koordinationseinheit 112 leitet den Befehl an die Bedienschnittstelle 122 weiter. Die Bedienschnittstelle 122 veranlaßt, daß das Anzeigefeld 136 im leuchtenden Zustand auf dem Bildschirm 128 dargestellt wird.

Die Spracheinheit 116 ist mit der Koordinationseinheit 112 über eine bidirektionale Verbindung 144 verbunden. Außerdem ist die Spracheinheit 116 mit einem Mikrofon 146 zur Spracheingabe verbunden.

Über das Endgerät 10 lassen sich somit Leistungsmerkmale der Telekommunikationsanlage 12 nutzen. Jedoch ist es mit Hilfe des Endgeräts 10 ebenso möglich, die im Standard H.323 genannten Leistungsmerkmale beispielsweise zum Übertragen von Multimediadaten zu nutzen.

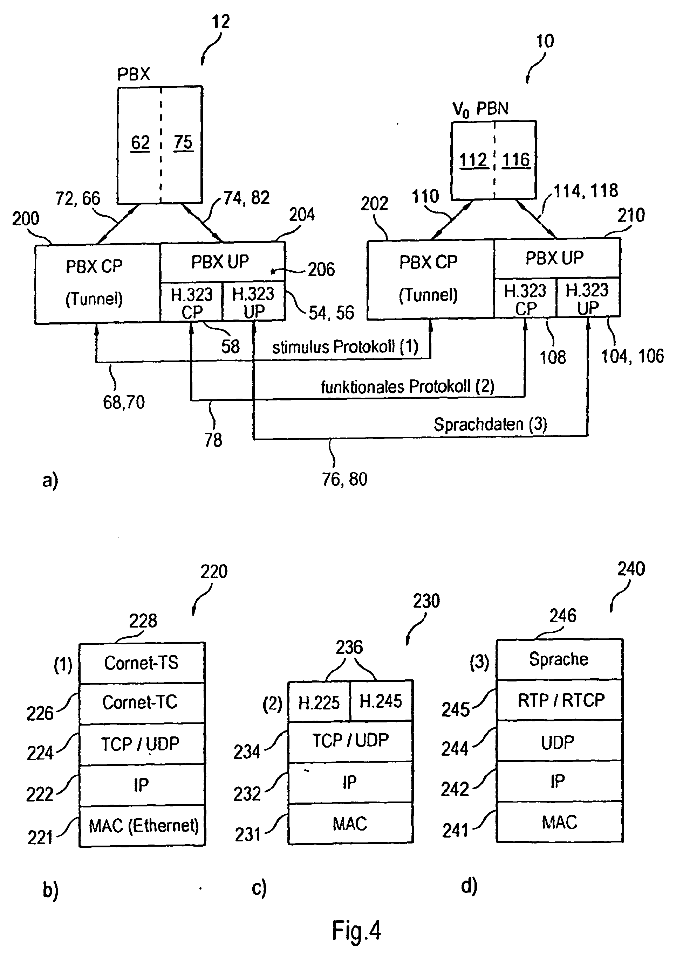

Figur 4 zeigt in einem Teil a wichtige Protokolle, die in der Telekommunikationsanlage 12 und im Endgerät 10 verwendet werden. Der Teil a der Figur 4 ist somit eine andere Darstellungsweise für die an Hand der Figuren 2 und 3 erläuterten Vorgänge. Eine Steuerebene 200 betrifft alle Steuerbefehle, die in der Steuereinheit 62 bearbeitet werden. Die Steuerbefehle werden über die Signalisierungsstrecken 66 und 72 von bzw. zur Steuereinheit 62 der Telekommunikationsanlage 12 übertragen. Im Endgerät 10 gibt es eine Steuerebene 202. Von der Steuerebene 202 werden Steuerbefehle über die bidirektionale Übertragungsstrecke 110 von bzw. zur Koordinationsein heit 112 übertragen. Die beiden Steuerebenen 200, 202 sind über die Signalisierungsstrecken 68, 70 miteinander verbunden, auf denen die Steuerbefehle gemäß Stimulus-Protokoll getunnelt werden.

Eine Nutzdatenebene 204 stellt die im Hauptkoppelfed 75 der Telekommunikationsanlage 12 übertragenen Sprachdaten dar. Die Sprachdaten der Nutzdatenebene 204 kommen vom Hauptkoppelfeld 75 oder werden zum Hauptkoppelfeld 75 über die Übertragungsstrecken 74 bzw. 82 übertragen. Ein Stern 206 in der Nutzdatenebene 204 symbolisiert den automatischen Aufbau bzw. Abbau der Sprachverbindungen zwischen der Anschlußbaugruppe 16 und dem Endgerät 1C in der Verbindungseinheit 58. Zur Nutzdatenebene gehören auch die Steuerbefehle zum Aufbau bzw. Abbau der Sprachverbindung gemäß Protokollen H.225.0 und H.245, die in Teil a der Figur 4 unter dem Standard H.323 gefasst worden sind. Auf der Seite des Endgeräts 10 gibt es eine Nutzdatenebene 210, deren Nutzdaten von der Spracheinheit 116 über die Leitungen 114, 118 kommen bzw. gesendet werden. Zum Aufbau der Sprachverbindung wird auf der Seite des Endgeräts 10 die Verbindungseinheit 108 genutzt. Die Verbindungseinheit 58 und 106 tauschen Steuerbefehle gemäß dem funktionalen Protokoll aus, das durch die Standards H.225.0 und H.245 festgelegt. ist.

Zur Nutzdatenebene 204 gehören auf der Seite der Telekommunikationsanlage 12 die Sprachdaten, die über die Sprachübertragungseinheiten 54 und 56 übertragen werden. Auf der Seite des Endgeräts 10 werden die Sprachdaten mit Hilfe der Sprachübertragungseinheiten 104 und 106 übertragen. Die Sprachdaten werden zwischen Endgerät 10 und Telekommunikationsanlage 12 gemäß Protokoll H.323 (RTP/RTCP) über die Übertragungsstrecke 76 und 80 übertragen.

Teil b der Figur 4 zeigt einen sogenannten Protokollstapel 220 für die Übertragung auf den Signalisierungsstrecken 68, 70. Als Protokoll der untersten Schicht wird ein MAC-Protokoll verwendet (Medium Access Control). Im Beispiel wird als Übertragungsmedium ein Ethernet verwendet. Als nächsthöheres Protokoll wird das Internetprotokoll IP verwendet, vgl. Bezugszeichen 222. Die Übertragung wird mit Hilfe eines Protokolls TCP (Transmission Control Protocol) gesichert oder ungesichert mit Hilfe des Protokolls UDP (User Datagramm Protokoll) durchgeführt, vgl. Bezugszeichen 224. Darüber liegen die getunnelten Protokolle Cornet-TC und Cornet-TS, vgl. Bezugszeichen 226 und 228.

In einem Teil c der Figur 4 ist ein Protokollstapel 230 für die Übertragung auf der logischen Signalisierungsstrecke 78 dargestellt. Untere Protokollschichten 231, 232 und 234 stimmen mit den Protokollschichten 221, 222 und 224 überein. Eine über der Protokollschicht 234 liegende Protokollschicht 236 wird durch die Protokolle gemäß Standard H.225.0 und H.245 gebildet.

Ein Teil d der Figur 4 zeigt einen Protokollstapel 240 für die Übertragung über die Übertragungsstrecken 76 und 80. Untere Protokollschichten 241 und 242 stimmen mit den Protokollschichten 221 und 222 überein. Eine über der Protokollschicht 242 liegende Protokollschicht 244 betrifft das Protokoll UDP. In einer darüberliegenden Protokollschicht 246 ist das Format für die Sprachdaten festgelegt, die zwischen Telekommunikationsanlage 12 und Endgerät 10 übertragen werden.

## Patentansprüche

1. Verfahren zum Betreiben einer Vermittlungseinrichtung (12) unter Nutzung verschiedener Signalisierungsprotokolle,
- bei dem eine Vermittlungseinrichtung (12) Daten in einem Telekommunikationsnetz vermittelt,
- zwischen einer Steuereinheit (62) zum Steuern der vermittlungseinrichtung (12) und einer ersten Endeinheit ein erstes Protokoll zur Signalisierung von Steuerbefehlen verwendet wird,
- die Steuereinheit (62) über eine Schnittstelleneinheit mit einer zweiten Endeinheit (10) verbunden wird,
- zwischen der Schnittstelleneinheit (16) und der zweiten Endeinheit (10) zur Signalisierung von Steuerbefehlen ein zweites Protokoll verwendet wird, das sich vom ersten Protokoll unterscheidet,
- bei dem eine von der Schnittstelleneinheit (16) umfasste Umwandlungseinheit (50, 52) von der Steuereinheit (62) gemäß erstem Protokoll empfangene Steuerbefehle in Steuerbefehle gemäß zweitem Protokoll einbettet und an die zweite Endeinheit (10) sendet
- und/oder aus von der zweiten Endeinheit (10) gemäß zweitem Protokoll empfangenen Steuerbefehlen Steuerbefehle gemäß erstem Protokoll entnimmt, die zuvor in der zweiten Endeinheit (10) in Signalisierungsbefehle gemäß zweitem Protokoll eingebettet worden sind, und an die Steuereinheit (62) sendet,
- bei dem eine erste von der Schnittstelleneinheit (16) umfasste Sprachübertragungseinheit (54) in einem Sprachkanal übertragene Sprachdaten auf Datenpakete aufteilt,
- bei dem eine zweite von der Schnittstelleneinheit (16) umfasste Sprachübertragungseinheit (56) Datenpaketen Sprachdaten entnimmt und sie in einem Sprachkanal sendet,
**dadurch gekennzeichnet, dass**
- eine der ersten (54) und zweiten Sprachübertragungseinheit (56) zugeordnete und von der Schnittstelleneinheit (16) umfasste verbindungseinheit (58) mit der Umwandlungseinheit (50, 52) verbunden wird,
- in der Umwandlungseinheit (50, 52) die empfangenen Steuerbefehle gemäß dem erstem Signalisierungsprotokoll daraufhin Überprüft werden, ob ein Aufbau bzw. Abbau einer Nutzdatenverbindung zwischen der Vermittlungseinrichtung (12) und dem zweiten Endeinheit (10) erforderlich ist, und
- beim Auftreten eines gesuchten Befehls das Auftreten der Verbindungseinheit (58) signalisiert wird, die den Aufbau bzw. Abbau der Nutzdatenverbindung veranlaßt wobei beim Aufbau bzw. Abbau der Nutzdaten verbindung die Verbindungseinheit (58) und die zweite Endeinheit (10) Steuerbefehle gemäß einem dritten funktionalen Protokoll austauschen.

2. Verfahren nach Anspruch 1,
**dadurch gekennzeichnet, daß** das erste Protokoll ein Stimulus-Protokoll ist, mit dessen Hilfe Zustände von Bedienelementen (130 bis 134) einer Endeinheit (10) an die Steuereinheit (62) gemeldet werden,
und/oder mit dessen Hilfe Zustände von Signalelementen (136 bis 140) einer Endeinheit (10) von der Steuereinheit (62) aus gesetzt werden.

3. Verfahren nach einem der vorhergehenden Ansprüche,
**dadurch gekennzeichnet, daß** in der Schnittstelleneinheit (16) von der vermittlungseinrichtung (12) in einem Datenkanal (74) übertragene Daten auf Datenpakete verteilt werden und gemäß einem für die zweite Endeinheit (10) festgelegten Übertragungsprotokoll an diese Endeinheit (10) übertragen werden,
und/oder daß in der Schnittstelleneinheit (16) vom zweiten Endgerät (10) kommenden Datenpakete entpackt werden und die entpackten Daten in einem Datenkanal (82) an die Vermittlungseinrichtung (12, 74) weitergeleitet werden.

4. Verfahren nach Anspruch 4,
**dadurch gekennzeichnet, daß** die Daten Sprachdaten zur Übertragung von Sprachsignalen sind.

5. Verfahren nach einem der vorhergehenden Ansprüche,
**dadurch gekennzeichnet, daß** die zweite Endeinheit (10) gemäß ITU-T-Standard H.323 arbeitet,
und daß die Vermittlungseinrichtung (12) eine Telekommunikationsanlage in einem durchschaltevermittelten Telefonnetz ist, in welchem Sprachdaten in Sprachkanälen übertragen werden.

6. Schnittstelleneinheit (16)
- mit einem ersten Anschluß, der mit der Steuereinheit (62) einer Vermittlungseinrichtung (12) verbindbar ist und an dem Signalisierungsbefehle gemäß einem ersten Protokoll übertragbar sind, das zwischen der Steuereinheit (62) und einer direkt an die Vermittlungseinrichtung (12) anschließbaren ersten Endeinheit verwendet wird,
- einem zweiten Anschluß, der mit einem Datenübertragungsnetz (20) verbindbar ist und an dem Signalisierungsbefehle gemäß einem vom ersten Protokoll abweichenden zweiten Protokoll von oder zu einer am Datenübertragungsnetz (20) betriebenen zweiten Endeinheit (10) übertragbar sind,
- mit einer Umwandlungseinheit (50, 52) zur Umwandlung von Signalisierungsbefehlen gemäß erstem Protokoll in Signalisierungsbefehle gemäß zweitem Protokoll und/oder von Signalisierungsbefehlen gemäß zweitem Protokoll in Signalisierungsbefehle gemäß erstem Protokoll,
- wobei die Umwandlungseinheit (50, 52) eingerichtet ist, beim Umwandeln Steuerbefehle gemäß erstem Protokoll in Steuerbefehle gemäß zweitem Protokoll einzubetten und/oder aus Steuerbefehlen gemäß zweitem Protokoll Steuerbefehle gemäß erstem Protokoll zu entnehmen, die in der zweiten Endeinheit (10) in Signalisierungsbefehle gemäß zweitem Protokoll eingebettet sind,
- mit einer ersten Sprachübertragungseinheit (54) zur Aufteilung von in einem Sprachkanal übertragenen Sprachdaten auf Datenpakete,
- mit einer zweiten Sprachübertragungseinheit (56) zum entnehmen von Sprachdaten aus Datenpaketen und zum Senden der Sprachdaten in einem Sprachkanal,
**gekennzeichnet durch**
- eine der ersten (54) und zweiten Sprachübertragungseinheit (56) zugeordnete Verbindungseinheit (58), die mit der Umwandlungseinheit (50, 52) verbunden ist, wobei
- die Umwandlungseinheit (50, 52) derart eingerichtet ist, dass in ihr die empfangenen Steuerbefehle gemäß dem erstem Signalisierungsprotokoll daraufhin überprüft werden, ob ein Aufbau bzw. Abbau einer Nutzdalenverbindung zwischen der Vermittlungseinrichtung (12) und dem zweiten Endeinheit (10) erforderlich ist, und
- beim Auftreten eines gesuchten Befehls das Auftreten der Verbindungseinheit (58) signalisiert wird, wobei
- die Verbindungseinheit (58) eingerichtet ist, den Aufbau bzw. Abbau der Nutzdatenverbindung zu veranlassens wobei beim Aufbau bzw. Abbau der Nutzdaten verbindung die Verbindungseinheit (58) und die zweite Endeinheit (10) Steuerbefehle gemäß einem dritten funktionalen Protokoll austauschen.

7. Schnittstelleneinheit (16) nach Anspruch 7, wobei die Schnittstelleneinheit (16) in einer Vermittlungseinrichtung (12) eingesetzt ist.

8. Schnittstelleneinheit (16) nach Anspruch 7,
wobei die Schnittstelleneinheit (16) außerhalb einer Vermittlungseinrichtung (12) eingesetzt ist.

9. Verwendung eines Programms zum Betreiben einer Vermittlungseinrichtung (12) unter Nutzung verschiedener Signalisierungsprotokolle,
mit einer durch den Prozessor (64) einer Datenverarbeitungsanlage ausführbaren Befehlsfolge,
**dadurch gekennzeichnet, daß** die Datenverarbeitungsanlage beim Ausführen der Befehlsfolge veranlaßt wird, die in einem der Patentansprüche 1 bis 5 gennannten Verfahrensschritte auszuführen.

## Claims

1. Method for operating a switching device (12) using different signalling protocols,
- in which a switching device (12) conveys data in a telecommunications network,
- between a control unit (62) for controlling the switching device (12) and a first terminal, a first protocol is used for signalling control commands,
- the control unit (62) is connected to a second terminal (10) by means of an interface,
- between the interface (16) and the second terminal (10) for signalling control commands, a second protocol is used which differs from the first protocol,
- in which a conversion unit (50, 52) enclosed by the interface (16) embeds control commands received from the control unit (62) according to the first protocol into control commands according to the second protocol and sends them to the second terminal (10),
- and / or from control commands received from the second terminal (10) according to the second protocol, takes control commands according to the first protocol which have previously in the second terminal (10) been embedded in signalling commands according to the second protocol, and sends them to the control unit (62),
- in which a first voice transmission unit (54) enclosed by the interface (16) divides voice data transmitted in a voice channel into data packets,
- in which a second voice transmission unit (56) enclosed by the interface (16) takes voice data from data packets and sends them in a voice channel, **characterised in that**
- a coupling unit (58) assigned to the first (54) and second voice transmission unit (56) and enclosed by the interface (16) is connected to the conversion unit (50, 52),
- in the conversion unit (50, 52) the control commands received according to the first signalling protocol are checked to determine whether a useful data connection needs to be established or terminated between the switching device (12) and the second terminal (10), and
- in the event of the occurrence of a sought command, the occurrence of the coupling unit (58) is signalled, which triggers the establishment or termination of the useful data connection,
wherein, if the useful data connection is established or terminated, the coupling unit (58) and the second terminal (10) exchange control commands according to a third functional protocol.

2. Method according to claim 1, **characterised in that** the first protocol is a stimulus protocol, with the help of which statuses of operating elements (130 to 134) of a terminal (10) are reported to the control unit (62), and / or with the help of which statuses of signal elements (136 to 140) of a terminal (10) are exposed by the control unit (62).

3. Method according to any one of the preceding claims, **characterised in that**, in the interface (16), data in a data channel (74) transmitted by the switching device (12) are distributed over data packets and are transmitted according to a transmission protocol specified for the second terminal (10) to this terminal (10) and / or that in the interface (16) data packets coming from the second terminal device (10) are unpacked, and the unpacked data are forwarded to the switching device (12, 74) in a data channel (82).

4. Method according to claim 4, **characterised in that** the data are voice data for transmitting voice signals.

5. Method according to any one of the preceding claims, **characterised in that** the second terminal (10) works to ITU-T Standard H.323, and that the switching device (12) is a telecommunications system in a directly switched telephone network, in which voice data is transmitted in voice channels.

6. Interface (16)
- with a first connection which can be connected to the control unit (62) of a switching device (12) and to which signalling commands can be transmitted according to a first protocol which is used between the control unit (62) and a first terminal which can be connected directly to the switching device (12),
- in which a second connection can be connected to a data transmission network (20) and to which signalling commands can be transmitted according to a second protocol which differs from the first protocol, from or to a second terminal (10) run on the data transmission network (20),
- with a conversion unit (50, 52) for the conversion of signalling commands according to a first protocol into signalling commands according to a second protocol and / or signalling commands according to a second protocol into signalling commands according to a first protocol,
- wherein the conversion unit (50, 52) is set up to embed control commands according to a first protocol, at conversion, into control commands according to a second protocol and / or to take, from control commands according to a second protocol, control commands according to a first protocol which are embedded in signalling commands according to a second protocol in the second terminal (10),
- with a first voice transmission unit (54) for splitting voice data transmitted in a voice channel into data packets,
- - with a second voice transmission unit (56) for removing voice data from data packets and for sending voice data in a voice channel,
**characterised by**
- a coupling unit (58) assigned to the first (54) and second voice transmission unit (56) and connected to the conversion unit (50, 52), wherein
- the conversion unit (50, 52) is set up in such a way that in it the control commands received according to the first signalling protocol are checked to determine whether a useful data connection needs to be established or terminated between the switching device (12) and the second terminal (10), and
- in the event of the occurrence of a sought command, the occurrence of the coupling unit (58) is signalled, wherein
- the coupling unit (58) is set up to trigger the establishment or termination of the useful data connection wherein, when the useful data connection is established or terminated, the coupling unit (58) and the second terminal (10) exchange control commands according to a third functional protocol.

7. Interface (16) according to claim 7, wherein the interface (16) is used in a switching device (12).

8. Interface (16) according to claim 7, wherein the interface (16) is used outside a switching device (12).

9. Use of a program for operating a switching device (12) using various signalling protocols, with a command sequence which can be carried out by the processor (64) of a data processing system, **characterised in that**, when carrying out the command sequence, the data processing system is triggered to carry out the process steps stated in any one of claims 1 to 5.

## Revendications

1. Procédé servant à opérer un commutateur (12) en utilisant divers protocoles de signalisation,
- dans le cadre duquel un commutateur (12) commute des données dans un réseau de télécommunication,
- un premier protocole servant à la signalisation d'instructions de commande est utilisé entre une unité de commande (62) servant à commander le commutateur (12) et un premier terminal,
- l'unité de commande (62) est reliée à un deuxième terminal (10) par l'intermédiaire d'une interface,
- un deuxième protocole différent du premier protocole est utilisé entre l'interface (16) et le deuxième terminal (10) servant à la signalisation d'instructions de commande,
- dans le cadre duquel une unité de conversion (50, 52) comprise par l'interface (16) intègre des instructions de commande reçues par l'unité de commande (62) selon un premier protocole dans des instructions de commande selon un deuxième protocole et les envoie au deuxième terminal (10),
- et/ou extrait selon un premier protocole, des instructions de commande reçues par le deuxième terminal (10) selon un deuxième protocole, des instructions de commande, lesquelles ont été intégrées au préalable selon un deuxième protocole dans le deuxième terminal (10) dans des instructions de signalisation, et les envoie à l'unité de commande (62),
- dans le cadre duquel une première unité de transfert vocal (54) comprises par l'interface (16) répartit des données vocales transférées dans un canal vocal sur des paquets de données,
- dans le cadre duquel une deuxième unité de transfert vocal (56) comprise par l'interface (16) extrait des paquets de données des données vocales et les envoie dans un canal vocal,
**caractérisé en ce**
- **qu'**une unité de liaison (58) associée à la première (54) et à la deuxième unité de transfert vocal (56) et comprise par l'interface (16) est reliée à l'unité de conversion (50, 52),
- en ce que les instructions de commande reçues sont par la suite vérifiées dans l'unité de conversion (50, 52) selon le premier protocole de signalisation pour savoir s'il est nécessaire d'établir ou de supprimer une liaison de données utiles entre le commutateur (12) et le deuxième terminal (10), et
- en ce qu'en cas d'affichage d'une instruction cherchée, l'affichage est signalé à l'unité de liaison (58), laquelle entraîne l'établissement ou la suppression de la liaison de données utiles, sachant que lors de l'établissement ou de la suppression de la liaison de données utiles, l'unité de liaison (58) et le deuxième terminal (10) échangent des instructions de commande selon un troisième protocole fonctionnel.

2. Procédé selon la revendication 1,
**caractérisé en ce que** le premier protocole est un protocole de stimulus, à l'aide duquel des états des éléments de réglage (130 à 134) d'un terminal (10) sont signalés à l'unité de commande (62),
et/ou à l'aide duquel des états des éléments de signaux (136 à 140) d'un terminal (10) sont ajustés depuis l'unité de commande (62).

3. Procédé selon l'une quelconque des revendications précédentes,
**caractérisé en ce que** des données transférées dans un canal de données (74) par le commutateur (12) sont réparties sur des paquets de données dans l'interface (16) et sont transférées, selon un protocole de transfert spécifié pour le deuxième terminal (10), au terminal (10), et/ou **en ce que** des paquets de données provenant du deuxième terminal (10) sont décompressés dans l'interface (16) et les données décompressées sont réacheminées dans un canal de données (82) au commutateur (12, 74).

4. Procédé selon la revendication 4,
**caractérisé en ce que** les données sont des données vocales servant au transfert de signaux vocaux.

5. Procédé selon l'une quelconque des revendications précédentes,
**caractérisé en ce que** le deuxième terminal (10) fonctionne selon la norme ITU-T H.323,
et **en ce que** le commutateur (12) est une installation de télécommunication d'un réseau téléphonique commuté par circuits, dans lequel des données vocales sont transférées dans des canaux vocaux.

6. Interface (16),
- comprenant une première borne, qui peut être reliée à l'unité de commande (62) d'un commutateur (12) et à laquelle des instructions de signalisation peuvent être transférées selon un premier protocole, qui est utilisé entre l'unité de commande (62) et un premier terminal pouvant être connecté directement au commutateur (12),
- une deuxième borne, qui peut être reliée à un réseau de transfert de données (20) et à laquelle des instructions de signalisation peuvent être transférées selon un deuxième protocole différent du premier protocole, par ou en direction d'un deuxième terminal (10) opéré au niveau du réseau de transfert de données (20),
- une unité de conversion (50, 52) servant à convertir des instructions de signalisation selon un premier protocole en des instructions de signalisation selon un deuxième protocole et/ou des instructions de signalisation selon un deuxième protocole en des instructions de signalisation selon un premier protocole,
- sachant que l'unité de conversion (50, 52) est mise au point pour intégrer lors de la conversion des instructions de commande selon un premier protocole en des instructions de commande selon un deuxième protocole et/ou pour extraire des instructions de commande selon un deuxième protocole des instructions de commande selon un premier protocole, lesquelles sont intégrées dans le deuxième terminal (10) dans des instructions de signalisation selon un deuxième protocole,
- une première unité de transfert vocal (54) servant à répartir des données vocales transférées dans un canal vocal sur des paquets de données,
- une deuxième unité de transfert vocal (56) servant à extraire des données vocales de paquets de données et servant à envoyer les données vocales dans un canal vocal, **caractérisée par**
- une unité de liaison (58) associée à la première (54) et à la deuxième unité de transfert vocal (56), laquelle est reliée à l'unité de conversion (50, 52), sachant
- que l'unité de conversion (50, 52) est mise au point de telle manière que des instructions de commande reçues par elle sont vérifiées ensuite selon le premier protocole de signalisation pour savoir s'il est nécessaire d'établir ou de supprimer une liaison de données utiles entre le commutateur (12) et le deuxième terminal (10), et
- que lors de l'affichage d'une instruction cherchée, l'affichage est signalé à l'unité de liaison (58), sachant
- que l'unité de liaison (58) est mise au point pour entraîner l'établissement ou la suppression de la liaison de données utiles, sachant que lors de l'établissement ou de la suppression de la liaison de données utiles, l'unité de liaison (58) et le deuxième terminal (10) échangent des instructions de commande selon un troisième protocole fonctionnel.

7. Interface (16) selon la revendication 7, sachant que l'interface (16) est utilisée dans un commutateur (12).

8. Interface (16) selon la revendication 7,
sachant que l'interface (16) est utilisée en dehors d'un commutateur (12).

9. Utilisation d'un programme servant à opérer un commutateur (12) en utilisant divers protocoles de signalisation,
comprenant une séquence d'instructions pouvant être exécutée par le processeur (64) d'une installation de traitement de données,
**caractérisée en ce que** l'installation de traitement de données est amenée lors de l'exécution de la séquence d'instructions à exécuter des étapes de procédé évoquées dans l'une quelconque des revendications 1 à 7.
